# EUROPÄISCHE PATENTSCHRIFT

(11) **EP 3 119 618 B1**
(45) Veröffentlichungstag und Bekanntmachung des Hinweises auf die Patenterteilung: **25.04.2018**
(21) Anmeldenummer: 15710472.0
(22) Anmeldetag: 12.03.2015
(51) Int. Cl.: B60C 23/04, B60C 23/06

(54) **VERFAHREN UND ANORDNUNG ZUM LOKALISIEREN DER VERBAUPOSITION VON RÄDERN IN EINEM FAHRZEUG**
METHOD AND SYSTEM FOR ALLOCATING WHEELPOSITIONS AT THE VEHICLE
METHODE ET SYSTEME AFIN DE DEFINIR LA POSITION DES ROUES SUR LE VEHICULE

(30) Priorität: 17.03.2014 DE 102014204862
(43) Veröffentlichungstag der Anmeldung: 25.01.2017
(73) Patentinhaber: Continental Automotive GmbH, 30165 Hannover (DE)
(72) Erfinder: BETTECKEN, Jürgen, 93049 Regensburg (DE); SKOTNITZKI, Thomas, 94356 Kirchroth (DE)
(86) Internationale Anmeldenummer: PCT/EP2015/055230
(87) Internationale Veröffentlichungsnummer: WO 2015/140052

(56) Entgegenhaltungen:
- EP-A1- 1 616 723
- DE-A1- 10 342 297

## Beschreibung

Die vorliegende Erfindung bezieht sich auf ein Verfahren und eine Anordnung zum Lokalisieren einer Verbauposition von zumindest zwei Rädern an einem Fahrzeug, sowie auf ein Steuergerät, ein Fahrzeug mit einer entsprechenden Anordnung zum Lokalisieren der jeweiligen Verbauposition und ein Computerprogrammprodukt.

Der Reifendruck eines Fahrzeugrades unterliegt aufgrund verschiedenster Ursachen, beispielsweise dem Umgebungsdruck des Rads, Temperatur, Alter des Rads, usw. bestimmten Änderungen. In diesem Zusammenhang wurde festgestellt, dass ein falsch eingestellter Reifendruck einen wesentlichen Faktor bei Unfällen im Straßenverkehr darstellt. Da die Fahrzeugsicherheit und Zuverlässigkeit zentrale Faktoren im Automobilbereich sind, muss allein schon aus sicherheitstechnischen Gründen der Reifendruck regelmäßig überprüft werden. Moderne Fahrzeuge, wie Kraftfahrzeuge weisen u. a. aus diesen Gründen Reifeninformationsvorrichtungen, wie etwa Reifendruckkontrollsysteme auf. Diese Reifeninformationsvorrichtungen umfassen im Fahrzeugrad verbaute Radelektroniken, die mittels spezieller Sensoren radspezifische Messwerte verschiedener Messgrößen (beispielsweise Reifendruck, Reifentemperatur, Radlast, usw.) messen und die Messwerte bzw. davon abgeleitete Informationen insbesondere mittels hochfrequenter Signale (RF-Signale) an eine fahrzeugseitige Empfangseinrichtung zur Weiterleitung an eine fahrzeugseitige zentrale Auswerteeinrichtung senden.

Allgemein kann somit als elektronische Radeinheit oder Radelektronik jede Einrichtung verstanden werden, die radspezifische Informationen und Zustände ermittelt, über die am Fahrzeugrad möglicherweise auftretende Fehlerzustände detektiert werden können. Der Begriff Fehlerzustand ist im vorliegenden Zusammenhang weit auszulegen und umfasst alle Zustände, Eigenschaften und Informationen eines jeweiligen Rades, die als detektionswürdig betrachtet werden können.

In diesem Zusammenhang besteht jedoch ein Problem darin, eine automatische und eindeutige Zuordnung eines empfangenen Sendesignals zur zunächst unbekannten Radposition des Senders, also der Radelektronik, zu treffen. Zwar kann eine Radelektronik eine für diese Radelektronik eindeutige individuelle Kennung bzw. eine eindeutige Seriennummer in dem gesendeten Sendesignal bzw. Funksignal mit übertragen. Jedoch ist damit noch nicht bekannt, an welcher Stelle des Fahrzeugs dieses Fahrzeugrad tatsächlich angebracht, also verbaut ist. Zusätzlich zu der eigentlichen Detektion eines Fehlerzustands ist es somit bei Reifeninformationsvorrichtungen bzw. Reifeninformationssystemen daher auch notwendig, die sog. Verbauposition der einzelnen Fahrzeugräder bezogen auf das Fahrzeug zu ermitteln, um beispielsweise den Benutzer oder Fahrer des Fahrzeugs bei Auftreten eines Reifen(druck)problems entsprechend zu informieren, etwa mit einem Warnhinweis "Druckabfall links, vorne". In der einschlägigen Literatur wird dies auch als Lokalisation oder Lokalisierung der Verbauposition bezeichnet.

Beispielsweise ist aus der Druckschrift DE 197 34 323 B4 ein Verfahren zur Lokalisierung von Fahrzeugrädern bekannt, bei dem jedes Rad eine eigene Reifendruckkontrolleinrichtung aufweist, die jeweils in zeitlichen Abständen Funksignale mit entsprechenden Reifeneigenschaften und einer individuellen Kennung an eine Zentraleinheit am Fahrzeug aussendet. Ferner ist jedem Rad ein Drehwinkel- bzw. Drehzahlsensor für ein Antiblockiersystem (ABS) zugeordnet. Mit Hilfe von Umdrehungssensoren in den Radelektroniken kann nun zu zwei vorgegebenen Zeitpunkten der Winkelversatz eines Rads eines Kraftfahrzeugs gemessen werden. Aus den Signalen der ABS-Drehzahlsensoren wird dann festgestellt an welchem Rad des Fahrzeugs der entsprechende Winkelversatz vorliegt und es wird eine entsprechende Zuordnung bzw. Lokalisierung getroffen. Zwar erlaubt dieses Verfahren, das auch als LSE-(Localisation with synchronised emission: Lokalisierung mit synchronisierter Abstrahlung) Verfahren bekannt ist, eine automatische Lokalisierung der einzelnen Fahrzeugräder, jedoch nur unter bestimmten Bedingungen. Insbesondere ist es notwendig, dass es eine Desynchronisierung der Räder gibt, d. h. dass die Räder aufgrund von verschiedenen Drehzahlen beispielsweise bei einer Kurvenfahrt oder bei Straßenunebenheiten, wie Schlaglöchern, einen gewissen Winkelversatz haben und "auseinander laufen". Jedoch werden Kraftfahrzeuge auch mit Regelalgorithmen ausgestattet, die den Antriebsstrang beeinflussen, so dass diese Regelung des Antriebs bis hin zum Vier-Rad-Antrieb der für das Grundprinzip von LSE notwendigen Desynchronisierung entgegenwirkt, und das Auseinanderlaufen der Räder reduziert, manchmal auch verhindert.

Aus der EP 1 616 723 A1 ist ein Verfahren gemäß dem Oberbegriff des Anspruchs 1 bekannt.

Aus der DE 103 42 297 A1 ist ein Verfahren zur Ermittlung der Radposition von Rädern eines Kraftfahrzeuges bekannt, bei dem die jeweilige Winkelposition der Sendeantenne für die Bestimmung der Radposition mit berücksichtigt wird.

Somit ist es die Aufgabe der vorliegenden Erfindung, eine Möglichkeit zur robusten Lokalisierung von Fahrzeugrädern zu schaffen, die trotz der oben genannten Probleme zuverlässig einsetzbar ist.

Diese Aufgabe wird durch den Gegenstand der unabhängigen Ansprüche gelöst. Vorteilhafte Ausgestaltungen sind Gegenstand der Unteransprüche.

Gemäß einem ersten Aspekt der Erfindung wird dabei ein Verfahren zum Lokalisieren einer jeweiligen Verbauposition von zumindest zwei Rädern an einem Fahrzeug, insbesondere an einem Kraftfahrzeug, geschaffen, das folgende Schritte umfasst. Es wird ein erstes Funksignal eines an einem Rad der zumindest zwei Räder montierten ersten ersten Sensors empfangen, wobei das erste Funksignal eine Stellung bzw. Winkelstellung des Rades angibt. Ferner wird ein zweites Funksignal eines an einem weiteren Rad der zumindest zwei Räder montierten zweiten ersten Sensors empfangen, wobei das zweite Funksignal eine Stellung bzw. Winkelstellung des weiteren Rades angibt. Überdies wird ein erster Messwert eines ersten zweiten Sensors empfangen, der eine Winkellage eines ersten Rades der zumindest zwei Räder misst, und der einer bestimmten ersten Stelle des Fahrzeugs zugeordnet ist. Schließlich wird ein zweiter Messwert eines zweiten zweiten Sensors empfangen, der eine Winkellage eines zweiten Rades der zumindest zwei Räder misst, und der einer bestimmten zweiten Stelle des Fahrzeugs zugeordnet ist. Zudem wird eine erste Phasenlage des ersten Funksignals in Relation zu dem ersten Messwert sowie eine zweite Phasenlage des ersten Funksignals in Relation zu dem zweiten Messwert bestimmt. Falls die erste Phasenlage und die zweite Phasenlage in einem vorbestimmten Beobachtungsintervall jeweils innerhalb eines vorgegebenen Toleranzbereichs bleibt, wird die jeweilige Verbauposition der zumindest zwei Räder durch Messen einer Feldstärke des ersten Funksignals und einer Feldstärke des zweiten Funksignals mittels einer fahrzeugseitigen Empfangseinrichtung ermittelt, wobei die jeweils gemessene Feldstärke eine Entfernung der fahrzeugseitigen Empfangseinrichtung zu dem ersten ersten Sensor und zu dem zweiten ersten Sensor kennzeichnet.

Dabei wird hier und im Folgenden unter einem ersten ersten Sensor ein erster Sensor einer ersten Sensorart und unter einem zweiten ersten Sensor ein zweiter Sensor der ersten Sensorart verstanden. Unter einem ersten zweiten Sensor wird hier und im Folgenden ein erster Sensor einer zweiten Sensorart und unter einem zweiten zweiten Sensor ein zweiter Sensor der zweiten Sensorart verstanden. Die zweite Sensorart ist typischerweise von der ersten Sensorart verschieden. Es ist jedoch auch möglich, dass die zweite Sensorart der ersten Sensorart entspricht.

Der Vorteil der Erfindung liegt somit darin, dass das Verfahren zunächst versucht, eine Lokalisierung durch einen Winkelabgleich eines ersten Sensors an einem Rad mit entsprechenden zweiten Sensoren, beispielsweise in der Form von Drehwinkelsensoren bzw. Drehzahlsensoren eines ABS-Systems durchzuführen, die in der Regel sowieso am Fahrzeug verbaut sind, und dann bei einem möglichen Scheitern dieses Verfahrens eine zusätzliche Lokalisierungsmethode mittels der Feldstärkemessung, bei der die jeweils gemessene Feldstärke als Maß für die Entfernung der fahrzeugseitigen Empfangseinrichtung zu dem ersten ersten Sensor und zu dem zweiten ersten Sensor einen Rückschluss auf die jeweilige Verbauposition erlaubt, selbständig hinzuzieht. Auf diese Weise wird eine robuste und zuverlässige Möglichkeit der automatischen Lokalisierung von Fahrzeugrädern geschaffen.

An dieser Stelle sei auch darauf hingewiesen, dass die Erfindung auch auf die Lokalisierung von Reifen als solche bezogen ist, das erfindungsgemäße Verfahren auch im Sinne eines Verfahrens zur Lokalisierung der Verbauposition von zumindest zweier Reifen an einem Kraftfahrzeug zu lesen ist. Der Begriff "Rad" wäre dann auch im übrigen Teil der Anmeldung gedanklich durch den Begriff "Reifen" zu ersetzen.

Gemäß einer Ausgestaltung des Verfahrens wird, falls eine der ersten Phasenlage oder der zweiten Phasenlage in dem vorbestimmten Beobachtungsintervall nicht innerhalb des vorgegebenen Toleranzbereichs bleibt und somit eine eindeutige Zuordnung des ersten ersten Sensors zu einem der zweiten Sensoren möglich ist, der erste erste Sensor demjenigen des ersten zweiten Sensors oder zweiten zweiten Sensors zugeordnet, dessen zugeordnete Phasenlage in dem vorbestimmten Beobachtungsintervall innerhalb des vorgegebenen Toleranzbereichs bleibt. Somit ist es möglich, bei ausreichender Desynchronisierung der Räder eine vollständige Lokalisierung mittels Winkelabgleich durchzuführen.

Gemäß einer weiteren Ausgestaltung des Verfahrens sendet der erste erste Sensor das erste Funksignal in einer vorgebbaren Stellung des Rades aus und/oder sendet der zweite erste Sensor das zweite Funksignal in einer vorgebbaren Stellung des weiteren Rades aus. In diesem Fall müssen keine bzw. weniger Messwerte einer Winkelstellung eines jeweiligen Rades vom Sensor zur Empfangseinrichtung übertragen werden, sondern es genügt im Prinzip ein impulsförmiges (Funk)Signal bei Erreichen einer vorgegebenen Stellung des Rades. Einerseits ist das Signal weniger komplex, andererseits können sich auch Vorteile bei der Abarbeitung der Verfahrensschritte ergeben, wenn von einem fixen Winkel des Rades ausgegangen werden kann. Selbstverständlich können bei Erreichen der vorgegebenen Stellung auch andere Daten übertragen werden, etwa ein jeweiliger im Reifen herrschender Druck.

Dabei kann die vorgebbare Stellung ausgewählt sein aus der Gruppe, bestehend aus einer Winkelstellung des Rades bezogen auf den Raum, einem Eintritt eines Punkts am Radumfang in eine Radaufstandfläche, einem Austritt eines Punktes am Radumfang aus der Radaufstandfläche und einem Erreichen eines Punkts am Radumfang einer Mitte der Radaufstandfläche. Diese Stellungen sind einfach zu ermitteln und eignen sich daher gut für die Anwendung im Rahmen der Erfindung. Dabei ist zu beachten, dass die Winkelstellung bei Eintritt und Austritt aus der Radaufstandfläche typischerweise mit Radlast, Reifendruck, etc. variiert. Für die Erfassung der angesprochenen vorgebbaren Radstellungen eignen sich insbesondere Beschleunigungssensoren, die eine Beschleunigung quer zur Rotationsachse des Rades messen können, sowie Piezosensoren, welche den Eintritt in die Radaufstandfläche oder den Austritt aus der Radaufstandfläche sowie das Durchwandern derselben erfassen können.

Gemäß einer weiteren Ausgestaltung des Verfahrens kann das vorbestimmte Beobachtungsintervall derart gewählt werden, dass es eine vorbestimmte Umdrehungszahl des ersten Rades oder des zweiten Rades der zumindest zwei Räder umfasst. Es ist auch denkbar, dass das vorbestimmte Beobachtungsintervall ein vorbestimmtes Zeitintervall umfasst. Insbesondere kann mit der Messung des vorbestimmten Beobachtungsintervalls begonnen werden, wenn sich das erste Rad oder das zweite Rad der zumindest zwei Räder (aus dem vom Stillstand) beginnt, mit einer Geschwindigkeit größer als einer bestimmten vorgegebenen Geschwindigkeit zu drehen.

Überdies ist es denkbar, wenn allgemein zur Bestimmung des vorbestimmten Beobachtungsintervalls ein Eintreten einer bestimmten Betriebssituation des Kraftfahrzeugs abgewartet wird, insbesondere bei deren Auftreten das oben genannte Verfahren gestartet und/oder beendet wird. Beispielsweise kann der Beginn und das Ende einer Kurvenfahrt mit einem Querbeschleunigungsmesser festgestellt werden. Bei Beginn der Kurvenfahrt kann dann das erfindungsgemäße Verfahren gestartet und mit der Messung des Beobachtungsintervalls begonnen werden, solange bis das Ende der Kurvenfahrt festgestellt wird, um die Messung des Beobachtungsintervalls zu beenden und zu prüfen, ob die erste Phasenlage und die zweite Phasenlage in dem vorbestimmten Beobachtungsintervall jeweils innerhalb des vorgegebenen Toleranzbereichs geblieben sind. Neben Kurvenfahrten ist natürlich auch die Auswertung anderer Betriebssituationen möglich, in denen sich üblicherweise eine Drehzahldifferenz der Räder einstellt. Beispielsweise sind dies starke Beschleunigungs- und Bremsmanöver, bei denen es häufig zu durchdrehenden Rädern kommt. Es können also völlig "normale" Betriebssituationen eines Fahrzeugs zur Lokalisierung der Räder herangezogen werden, wodurch der Ablauf des erfindungsgemäßen Verfahrens im Hintergrund und vom Fahrer völlig unbemerkt ablaufen kann. Eine eigens dafür vorgesehen Messprozedur, welche von den Fahrern bzw. Benutzern gestartet und daher vermutlich als lästig empfunden werden würde, muss daher nicht durchlaufen werden.

Gemäß einer weiteren Ausgestaltung des Verfahrens wird die fahrzeugseitige Empfangseinrichtung entfernungsmäßig unsymmetrisch bezüglich der zumindest zwei Räder angeordnet. Das bedeutet, die Entfernung der fahrzeugseitigen Empfangseinrichtung zum Empfangen der von den jeweiligen Radelektroniken ausgesendeten ersten bzw. zweiten Funksignale ist zu einem der Räder, beispielsweise zu dem ersten Rad, geringer, während sie zu dem weiteren Rad, beispielsweise zu dem zweiten Rad der zumindest zwei Räder größer ist. Auf diese Weise kann unterschieden werden, welcher Verbauposition für ein Rad die fahrzeugseitige Empfangseinrichtung näher ist, da dort dann die Feldstärke der empfangenen Funksignale der entsprechenden Radelektronik typischerweise einen höheren Wert aufweist. Insbesondere wird die Genauigkeit der Lokalisierung mittels Feldstärkemessung in Bezug zu der unsymmetrischen Anordnung weiter verbessert, indem ein Funksignal von einer jeweiligen Radelektronik mit einer vorbestimmten Sendestärke ausgesendet wird. Vorteilhafterweise werden alle Funksignale mit gleicher Sendestärke ausgesendet. Auf diese Weise kann die gemessene Feldstärke in besonders zuverlässiger Weise als ein Maß für die Entfernung der fahrzeugseitigen Empfangseinrichtung zu den Radelektroniken dienen, um somit einen Rückschluss auf die jeweilige Verbauposition eines Rads sicher zu ermöglichen.

Gemäß einer Ausgestaltung können der erste zweite Sensor und der zweite zweite Sensor als ein Drehwinkelsensor bzw. Drehzahlsensor realisiert sein, insbesondere als ein ESP (elektronisches Stabilitätsprogramm) -Drehzahlsensor oder ein ABS (Antiblockiersystem) -Drehzahl.

Gemäß einem weiteren Aspekt der Erfindung wird eine Anordnung zum Lokalisieren einer jeweiligen Verbauposition von zumindest zwei Rädern an einem Kraftfahrzeug geschaffen. Dabei umfasst die Anordnung einen an einem Rad der zumindest zwei Räder montierten ersten ersten Sensor, ausgebildet zum Ausgeben eines ersten Funksignals, wobei das erste Funksignal eine (Winkel)-Stellung des Rads angibt. Außerdem ist an einem weiteren Rad der zumindest zwei Räder ein zweiter erster Sensor, ausgebildet zum Ausgeben eines zweiten Funksignals, wobei das zweite Funksignal eine (Winkel)-Stellung des weiteren Rads angibt, montiert. Eine fahrzeugseitige Empfangseinrichtung ist zum Empfangen des ersten Funksignals und des zweiten Funksignals ausgebildet. Ferner umfasst die Anordnung einen ersten zweiten Sensor, der einer bestimmten ersten Stelle des Fahrzeugs zugeordnet ist und ausgebildet ist, eine Winkellage eines ersten Rades der zumindest zwei Räder zu messen und einen entsprechenden ersten Messwert auszugeben. Überdies besitzt die Anordnung einen zweiten zweiten Sensor, der einer bestimmten zweiten Stelle des Fahrzeugs zugeordnet ist und der ausgebildet ist, eine Winkellage eines zweiten Rades der zumindest zwei Räder zu messen und einen entsprechenden zweiten Messwert auszugeben. Weiterhin weist die Anordnung eine fahrzeugseitige Auswerteeinrichtung auf, die ausgebildet ist, eine erste Phasenlage des ersten Funksignals in Relation zu dem ersten Messwert sowie eine zweite Phasenlage des ersten Funksignals in Relation zu dem zweiten Messwert zu bestimmen, und die ferner ausgebildet ist, falls die erste Phasenlage und die zweite Phasenlage in einem vorbestimmten Beobachtungsintervall jeweils innerhalb eines vorgegebenen Toleranzbereichs bleibt, die jeweilige Verbauposition der zumindest zwei Räder mittels einer gemessenen Feldstärke des ersten Funksignals und einer gemessenen Feldstärke des zweiten Funksignals zu ermitteln, wobei die jeweils gemessene Feldstärke eine Entfernung der fahrzeugseitigen Empfangseinrichtung zu dem ersten ersten Sensor und zu dem zweiten ersten Sensor kennzeichnet.

Gemäß einem weiteren Aspekt der Erfindung wird ein Steuergerät für eine Anordnung zum Lokalisieren einer jeweiligen Verbauposition von zumindest zwei Rädern an einem Fahrzeug angegeben, welches folgende Merkmale aufweist. Das Steuergerät besitzt einen ersten Eingang ausgebildet zum Empfangen eines ersten Funksignals eines an einem Rad der zumindest zwei Räder montierten ersten ersten Sensors, wobei das erste Funksignal eine (Winkel)Stellung des Rades angibt, sowie zum Empfangen eines zweiten Funksignals eines an einem weiteren Rad der zumindest zwei Räder montierten zweiten ersten Sensors, wobei das zweite Funksignal eine (Winkel)Stellung des weiteren Rades angibt. Ferner besitzt das Steuergerät einen zweiten Eingang ausgebildet zum Empfangen eines ersten Messwerts eines ersten zweiten Sensors, der eine Winkellage eines ersten Rades der zumindest zwei Räder misst, und einer bestimmten ersten Stelle des Fahrzeugs zugeordnet ist, sowie zum Empfangen eines zweiten Messwerts eines zweiten zweiten Sensors, der eine Winkellage eines zweiten Rades der zumindest zwei Räder misst, und einer bestimmten zweiten Stelle des Fahrzeugs zugeordnet ist. Schließlich besitzt das Steuergerät eine Auswerteeinrichtung ausgebildet zum Bestimmen einer ersten Phasenlage des ersten Funksignals in Relation zu dem ersten Messwert sowie zum Bestimmen einer zweiten Phasenlage des ersten Funksignals in Relation zu dem zweiten Messwert. Überdies ist die Auswerteeinrichtung ausgebildet, falls die erste Phasenlage und die zweite Phasenlage in einem vorbestimmten Beobachtungsintervall jeweils innerhalb eines vorgegebenen Toleranzbereichs bleibt, die jeweilige Verbauposition der zumindest zwei Räder mittels einer gemessenen Feldstärke des ersten Funksignals und einer gemessenen Feldstärke des zweiten Funksignals zu ermitteln, wobei die jeweils gemessene Feldstärke eine Entfernung der fahrzeugseitigen Empfangseinrichtung zu dem ersten ersten Sensor und zu dem zweiten ersten Sensor kennzeichnet.

Gemäß einem weiteren Aspekt der Erfindung wird ein Fahrzeug, beispielsweise ein Kraftfahrzeug, insbesondere ein Personenkraftwagen oder ein Lastkraftwagen, geschaffen. Das Fahrzeug besitzt zumindest zwei Räder. Ferner besitzt das Fahrzeug eine Anordnung zum Lokalisieren der jeweiligen Verbauposition der zumindest zwei Räder nach einer oben erläuterten Darstellung.

Vorteilhafte Ausgestaltungen des Verfahrens sind, soweit auf die Anordnung und das Steuergerät übertragbar, auch als vorteilhafte Ausgestaltungen der Anordnung und des Steuergeräts anzusehen, und umgekehrt.

Gemäß einem weiteren Aspekt der Erfindung ist ein Computerprogrammprodukt angegeben, welches ausgeführt ist, ein Verfahren wie oben und im Folgenden beschrieben auszuführen, wenn es auf einem Steuergerät wie oben und im Folgenden beschrieben ausgeführt wird.

Das Computerprogrammprodukt weist die bereits im Zusammenhang mit den entsprechenden Ausführungsformen des erfindungsgemäßen Verfahrens bzw. des erfindungsgemäßen Steuergeräts genannten Vorteile auf, welche an dieser Stelle zur Vermeidung von Wiederholungen nicht nochmals aufgeführt werden.

Im Folgenden werden beispielhafte Ausführungsformen der vorliegenden Erfindung unter Bezugnahme auf die beiliegenden Zeichnungen näher erläutert. Es zeigen:
- Figuren 1: ein Kraftfahrzeug mit einer Anordnung gemäß einer Ausführungsform der Erfindung zur Lokalisierung der Verbauposition von zumindest zwei Rädern an dem Kraftfahrzeug;
- Figur 2: die wichtigsten Komponenten einer fahrzeugseitigen Steuereinrichtung für die Anordnung zur Lokalisierung gemäß Figur 1;
- Figur 3: ein Rad mit verschiedenen für die Lokalisierung der Verbauposition des Rades eingesetzten Sensoren in Detailansicht;
- Figur 4: die zeitlichen Abläufe der Signale eines ersten und mehrerer zweiten Sensoren für die Lokalisierung der Verbauposition;
- Figur 5: ein Ablaufdiagramm zur Darstellung eines Verfahrens zur Lokalisierung der Verbauposition von Rädern in einem Kraftfahrzeug gemäß einer Ausführungsform der Erfindung.

In den Figuren sind - sofern nichts anderes aufgeführt ist - gleiche und funktionsgleiche Elemente jeweils mit demselben Bezugszeichen versehen.

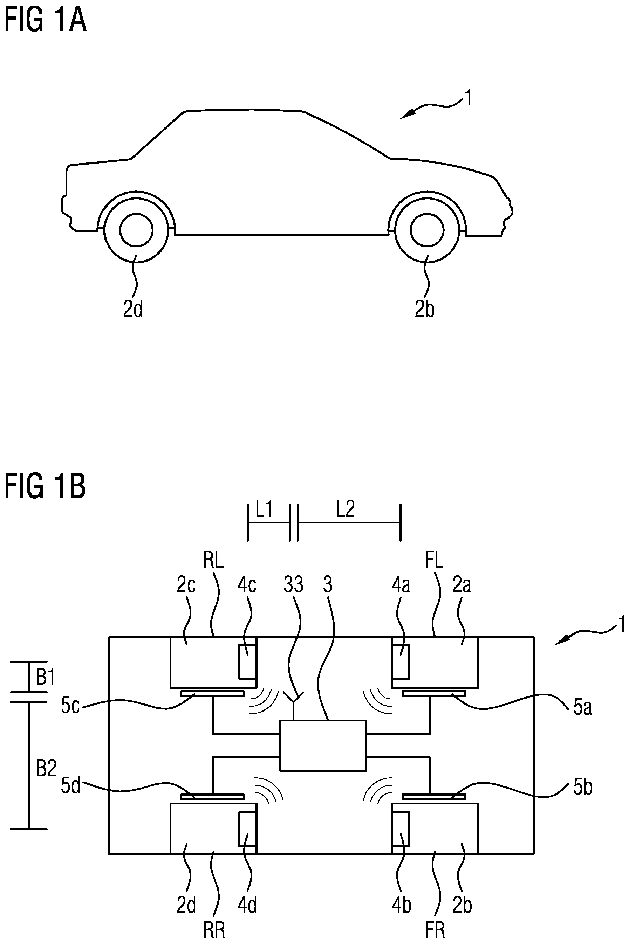

Es sei zunächst auf die Figuren 1 verwiesen, bei denen in Figur 1A ein Fahrzeug 1 in der Form eines Kraftfahrzeugs in einer Seitenansicht und in Figur 1B in einer Draufsicht unter Darstellung der wesentlichen fahrzeugseitigen Komponenten einer Anordnung zur Lokalisierung der Verbauposition von zumindest zwei Rädern gezeigt ist. Das Fahrzeug 1 umfasst vier Räder 2a - 2d mit jeweils zugeordneten ersten Sensoren 4a - 4d sowie ein fahrzeugseitiges Steuergerät 3 zur Lokalisierung von zumindest zweien der Räder 2a - 2d an dem Fahrzeug 1. Des Weiteren sind vier zweite Sensoren 5a - 5d vorgesehen, welche einer bestimmten Position am Fahrzeug 1 zugeordnet sind. Im gezeigten Beispiel ist der Sensor 5a links vorne (FL), der Sensor 5b rechts vorne (FR), der Sensor 5c links hinten (RL) und der Sensor 5d rechts hinten (RR) angeordnet.

Die ersten Sensoren 4a - 4d sind typischerweise Bestandteil eines Reifendruckkontrollsystem (RDKS) des Fahrzeugs 1, das auch als TPMS bezeichnet wird (TPMS, Tire Pressure Monitoring System). Dazu sind die ersten Sensoren 4a - 4d in einer jeweiligen Radelektronik in dem entsprechenden Fahrzeugrad der Räder 2a - 2d verbaut, beispielsweise auf einer einer Lauffläche eines Reifens des Fahrzeugrads gegenüberliegenden Innenfläche des Reifens oder an einem Reifenventil (dies gilt sowohl für die in Figur 1 gezeigten ersten Sensoren 4a - 4d als auch für die in den folgenden Figuren gezeigten ersten Sensoren).

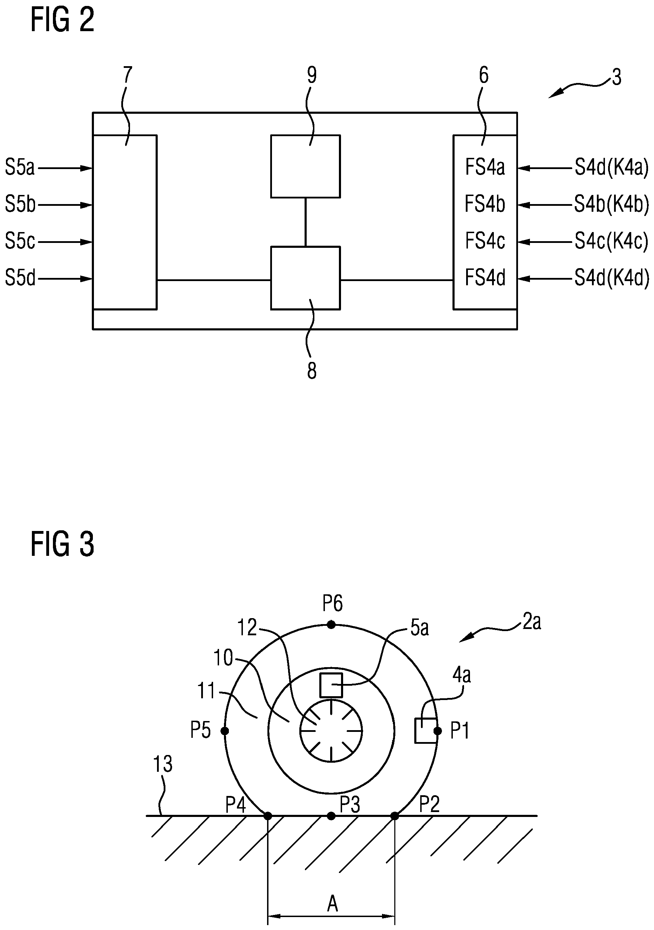

Figur 2 zeigt eine schematische Darstellung der wesentlichen Komponenten des fahrzeugseitigen Steuergeräts 3 für die Anordnung zur Lokalisierung der Verbauposition der Fahrzeugräder. Dabei umfasst das fahrzeugseitige Steuergerät 3 einen Empfänger 6 zur Erfassung von über eine Funkschnittstelle übermittelten Signalen S4a - S4d der ersten Sensoren 4a - 4d und stellt somit einen ersten Eingang zum Empfangen von Signalen, in diesem Fall Funksignalen geradseitigen Sensoren, dar. Des Weiteren ist ein Eingangsmodul 7 zum Erfassen von Signalen des 5a - 5d der zweiten Sensoren 5a - 5d vorgesehen, das somit einen zweiten Eingang zum Empfangen von Signalen, in diesem Fall von Messwerten der zweiten Sensoren darstellt. Darüber hinaus umfasst das fahrzeugseitige Steuergerät 3 einen Mikrocontroller 8 und einen Speicher 9. Der Speicher 9 kann u. a. dazu vorgesehen sein, für das Verfahren zur Lokalisierung nötige Daten sowie Abläufe zu speichern. In aller Regel wird das Verfahren in Form eines Programms im Speicher 9 abgelegt sein. Der Mikrocontroller 8 liest dieses aus und arbeitet das Verfahren Schritt für Schritt ab (wie es unten noch im Detail ausgeführt wird). Das fahrzeugseitige Steuergerät 3 kann dabei als ein eigenes Steuergerät ausgeführt sein, oder Teil eines anderen Steuergeräts, das auch andere Steueraufgaben des Fahrzeuges 1 ausführt. Ggf. sind die Teile des Steuergeräts dann nicht als physikalische, sondern als funktionelle Blöcke zu sehen. Der Einfachheit halber wird aber im Folgenden angenommen, es handelt sich um ein separates fahrzeugseitiges Steuergerät.

Es sei nun auf Figur 3 verwiesen, in der das Rad 2a in einer Detaildarstellung mit den diesem Rad zugeordneten Sensoren gezeigt ist. Das Rad 2a, welches auf einer Fahrbahn 13 steht, umfasst eine Felge 10, einen darauf montierten Reifen 11 und eine darauf montierte Strichscheibe 12. Durch die Radlast verformt sich der Reifen 11 im Bereich der Radaufstandfläche A (auch unter dem Begriff "Latsch" bekannt) und nimmt dort die Form der Fahrbahn an, welche im gezeigten Beispiel eben ist.

Der erste Sensor 4a, der in einer am Rad montierten Radelektronik integriert ist, die auch als Radeinheit bzw. als Wheel Unit (WU) bezeichnet wird, ist dazu vorgesehen, in einer bestimmten Stellung des Rades 2a ein Signal S4a auszusenden. Dies kann eine Winkelstellung des Rades bezogen auf den Raum, beispielsweise 3 Uhr entsprechend der Stellung P1, 9 Uhr entsprechend der Stellung P5 oder 12 Uhr entsprechend der Stellung P6 sein. Solche Stellungen können etwa mit einem fix am Rad 2a angebrachten Beschleunigungssensor in an sich bekannter Weise vergleichsweise einfach ermittelt werden, da die auf den Sensor wirkende Erdbeschleunigung immer zur Erdmitte weist. Wenn - was nicht unbedingt erforderlich ist - die Stellung des Rades 2a exakt ermittelt werden soll, sind übergelagerte Beschleunigungen, wie z. B. die Zentrifugalbeschleunigung, Beschleunigungen des Fahrzeugs, sowie Fahrten auf einer schiefen Ebene zu berücksichtigen. Neben der Auswertung der Richtung der Erdbeschleunigung kann natürlich auch die Richtung der Längsbeschleunigungen beim Beschleunigen und Abbremsen des Fahrzeugs 1 ausgewertet werden. Das Eintreten einer solchen Betriebssituation kann entweder durch differenzieren der Raddrehzahl oder mit im Fahrzeug 1 verbauten Beschleunigungssensoren detektiert werden. So kann z. B. wieder die 3-Uhr-Stellung P1, die 9-Uhr-Stellung P5 und die 12-Uhr-Stellung P6 erkannt werden. An sich ist die 6-Uhr-Stellung P3 ebenfalls eine Stellung im Raum, kann aber mit einem Beschleunigungssensor nur schwer ermittelt werden, da auf diesen während des gesamten Durchwanderns der Radaufstandsfläche A und nicht nur in einem singulären Punkt nur die Erdbeschleunigung wirkt. Die Stellung P3 wird daher gemeinsam mit den Stellungen P2 und P4 mit behandelt. Als Stellung des Rades 2a kann nämlich auch der Eintritt eines Punkts am Radumfang in die Radaufstandsfläche A (P2), Austritt eines Punkts am Radumfang aus der Radaufstandsfläche A (P4), Erreichen eines Punkts am Radumfang der Mitte der Radaufstandsfläche A (P3) vorgesehen sein. Für diesen Anwendungsfall kann beispielsweise ein Piezosensor eingesetzt werden, welcher im Bereich der Radaufstandsfläche A nicht gekrümmt, außerhalb der Radaufstandsfläche A leicht gekrümmt und in einem Übergangsbereich stark gekrümmt ist. Aus diesem Verformungsmuster kann auf die Stellung des Rads 2a geschlossen werden. Da die Radaufstandsfläche A unter anderem von der Radlast und dem Reifendruck abhängt sind die Positionen P2 und P4 nicht mit einer (konstanten) Stellung des Rads 2a im Raum identisch.

Vorteilhaft kann die von einem Piezokristall in elektrische Energie umgewandelte Verformungsenergie auch zur Energieversorgung des ersten Sensors 2a herangezogen werden. Ggf. kann auf eine Batterie dann völlig verzichtet werden. Es ist aber auch möglich, eine vorhandene Batterie zu stützen bzw. einen Kondensator zu laden, der die Energieversorgung über einen gewissen Zeitraum sicherstellt. Wegen der wechselnden Polarität der von dem Piezokristall erzeugten Spannung ist zusätzlich ein Gleichrichter vorzusehen.

Im gezeigten Beispiel senden die Sensoren 4a - 4d, insbesondere der in Figur 3 gezeigte Sensor 4a, entsprechende Signal S4a - S4d (bezüglich des Sensors 4a das Signal S4a) an einer vorgebbaren Stellung P1 - P6 des Rades 2a - 2d (insbesondere 2a für den Sensor 4a). Selbstverständlich funktioniert der gezeigte Ablauf aber auch dann, wenn das fahrzeugseitige Steuergerät 3 zu einem bestimmten Zeitpunkt die Stellung P1 - P6 eines Rades 2a - 2d abfragt.

Der zweite Sensor 5a ist dazu vorgesehen, eine Winkelstellung des Rads 2a zu messen. Dies erfolgt im gezeigten Beispiel in an sich bekannter Weise mit einer Reflex- oder Gabellichtschranke sowie einer Strichscheibe 12. Die Hell-/Dunkelunterschiede werden vom zweiten Sensor 5a erkannt und mit Hilfe einer nachgeschalteten Elektronik in eine Winkelstellung umgerechnet. An sich können aber auch direkt die Zählimpulse der Lichtschranke als winkeläquivalent weiter verarbeitet werden. Bei hoher Anzahl der auf der Strichscheibe 12 aufgebrachten Hell-/Dunkelwechsel ist eine hohe Winkelauflösung möglich, bei geringer Anzahl nur eine geringe Winkelauflösung. Im Fahrzeugbau werden häufig auch Zahn- oder Lochscheiben eingesetzt, wobei wegen der Schmutzanfälligkeit an Stelle eines optischen Sensors auch ein Hallsensor eingesetzt werden kann, sofern die Zahn- oder Lochscheibe aus Metall besteht. Prinzipiell sind natürlich auch kapazitive und induktive Aufnehmer für die Messung der Winkelstellung des Rads 2a denkbar.

Die Winkelstellungen der Räder 2a - 2d können mit wenig Aufwand durch Auswertung der Raddrehzahlsignale, wie beispielsweise ohnehin für ABS-Systeme (Antiblockiersysteme) und ESP-Systeme (elektronisches Stabilitätsprogramm) benötigt werden, bestimmt werden. Hierbei wird zu einem bestimmten Zeitpunkt etwa beim Einschalten der Zündung, ein Segment (oder auch Zahn) im Raddrehzahlsensor als Nullpunkt definiert. Bezogen auf diese Position können dann die folgenden Winkel basierend auf einer Zählung der durchlaufenden Segmente (bzw. Zähne) berechnet werden.

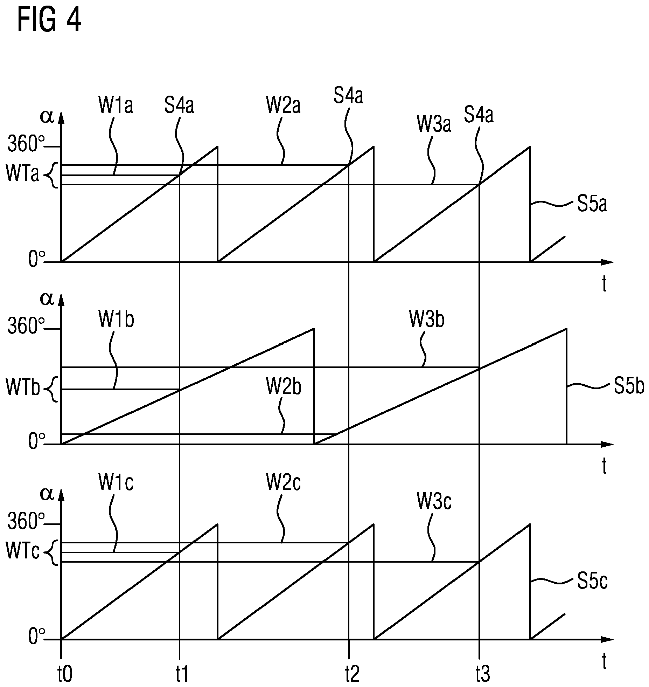

Es sei nun auf Figur 4 verwiesen, die ein Zeitdiagramm des ersten Sensors 4a links vorne und drei zweiter Sensoren 5a (links vorne), 5b (rechts vorne) und 5c (links hinten) zeigt, wobei das Signal S5a oben, das Signal S5b in der Mitte und das Signal S5c unten dargestellt ist.

Das Signal S5a zeigt einen sägezahnförmigen Verlauf, wobei ein Zahn einer vollen Umdrehung, also einem Winkel von 0 Grad bis 360 Grad, des Rades 2a entspricht. Das Signal S5b zeigt ebenfalls einen sägezahnförmigen Verlauf, allerdings mit geringerer Frequenz, was bedeutet, dass sich das Rad 2b langsamer als das Rad 2a bewegt. Das Rad 2c hingegen zeigt eine Frequenz, die im Wesentlichen der des Rads 2a entspricht, da die beiden Räder auf der gleichen Seite angeordnet sind. Das Fahrzeug 1 befindet sich hier im Beispiel also in einer Rechtskurve.

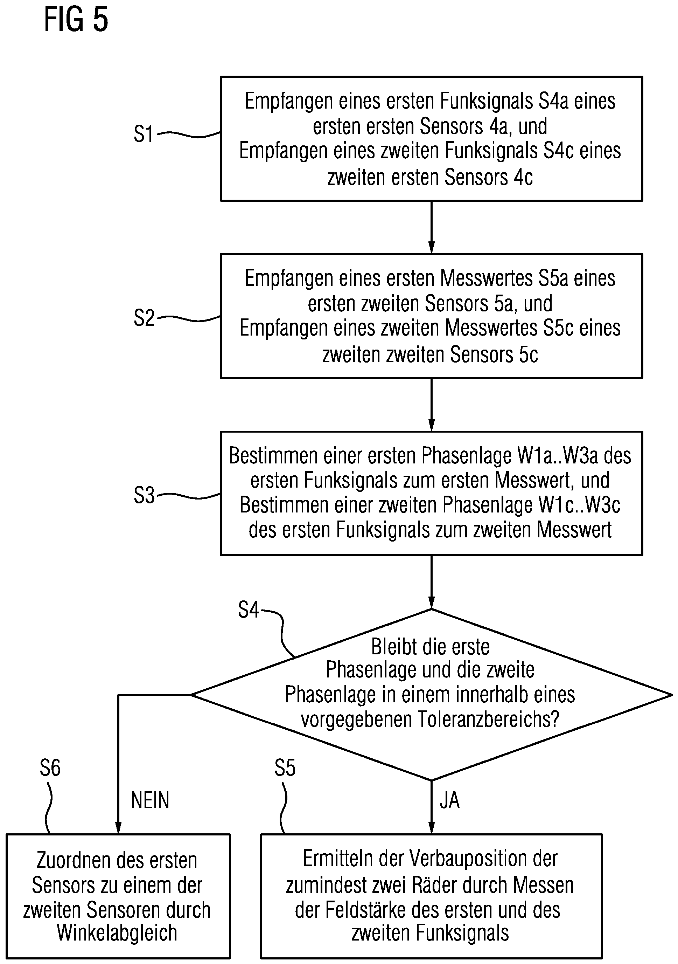

Die Funktion eines Verfahrens zum Lokalisieren der Verbauposition bzw. einer entsprechenden Anordnung gemäß einer Ausführungsform der Erfindung wird nun anhand des Ablaufdiagramms von Figur 5 mit Bezugnahme auf die Figuren 1 - 4 näher erläutert.

In einem ersten Schritt S1 wird das Signal S4a des an dem Rad 2a montierten (ersten) ersten Sensors 4a empfangen. Im gezeigten Beispiel wird angenommen, dies erfolge in der 9-Uhr-Stellung P5. Die Übermittlung des Signals erfolgt dabei über Funk, wobei andere Übertragungsmöglichkeiten prinzipiell ebenfalls möglich sind. Entsprechend kann auch schon das Signal der übrigen ersten Sensoren, wie das Signal S4c des (zweiten) ersten Sensors 4c empfangen werden, das dieser ebenso in der 9-Uhr-Stellung P5 bezüglich des Rads 2c über Funk übermittelt.

In einem zweiten Schritt S2 werden die Signale der zweiten Sensoren, insbesondere die Signal S5a und S5c der zweiten Sensoren 5a und 5c empfangen. Diese entsprechen dem in Figur 4 gezeigten Verlauf, es können aber auch treppenförmige Verläufe vorgesehen werden, wenn die Auflösung der zweiten Sensoren 5a und 5c geringer ist.

An dieser Stelle sei darauf hingewiesen, dass insbesondere die Schritte S1 und S2 bzw. die darin enthaltenen Unterschritte nicht in der angegebenen Reihenfolge bzw. überhaupt parallel abgearbeitet werden können. Des Weiteren können die Signale aller ersten Sensoren 4a - 4d und alle zweiten Sensoren 5a - 5d in einem Zyklus erfasst werden. Im gezeigten Beispiel wird aber der besseren Übersicht halber weiterhin davon ausgegangen, dass nur die erläuterten Signale der ersten und der zweiten angegebenen Sensoren ausgewertet werden.

In einem dritten Schritt S3 wird nun bestimmt, in welcher Phasenlage W1a - W3a das Signal S4a des ersten Sensors empfangen wird. Zu einem Zeitpunkt t1 wird das Signal S4a in einer Phasenlage W1a, zu einem Zeitpunkt t2 in einer Phasenlase W2a und zu einem Zeitpunkt t3 in einer Phasenlage W3a empfangen. Die Phasenlagen W1a - W3a bleiben nicht konstant, sondern sind einer gewissen Variation unterworfen. Dies ist etwa durch Messtoleranzen der Sensoren, sowie sog. "Jitter" also zeitlichen Schwankungen der Messung bzw. Messwertübertragung bedingt.

Ein weiterer Grund für einen Winkelversatz bei ansonsten konstanten Zeiten für Messung und Messwertübertragung ist auch die Drehzahl eines Rads. Je nach Drehzahl verursacht eine konstante Verarbeitungszeit unterschiedlichen Winkelversatz, was die Lokalisierung eines Rads 2a - 2d erschweren oder sogar unmöglich machen kann. Vorteilhaft ist im fahrzeugseitigen Steuergerät 3 der gesamte Zeitverzug vom Erreichen einer Radstellung P1 - P6 bis zum Empfang des Signals S4a - S4d dem Mikrocontroller 8 als Auswerteeinrichtung bekannt, so dass der genannte Einfluss berücksichtigt werden kann. Dies kann man z.B. durch Vorsehen eines konstanten Zeitintervalls vom Erreichen einer Radstellung P1 - P6 bis zum Empfang des Signals S4a - S4d erreichen. Hierbei wird, etwa von einer mit den Sensoren 4a - 4d verbundenen Radelektronik eine von der Raddrehzahl abhängige Verzögerungszeit zwischen Erreichen einer Radstellung P1 - P6 bis zum Senden des Signals S4a - S4d abgewartet, so dass der Winkelversatz konstant bleibt. Aber auch die Verwendung von Zeitstempeln bei einheitlicher Systemzeit ist möglich. Dabei wird die Radstellung P1 - P6 zusätzlich mit einem Zeitstempel versehen, der von der Auswerteeinrichtung bzw. dem Mikrocontroller 8 ausgewertet werden kann.

Ein wesentlicher und vor allem unbestimmter Zeitverzug kann auch während der Kommunikation zwischen dem Mikrocontroller 8 und den Sensoren 4a - 4d oder 5a - 5d mittels eines Kommunikationsbusses (z. B. CAN-Bus) entstehen, in welchem bestimmte oder konstante Übertragungszeiten nicht gewährleistet werden können. Vorteilhafterweise werden auch hier die Messwerte mit Zeitstempel versehen, und den tatsächlichen Zeitverzug im Mikrocontroller 8 berücksichtigen zu können.

Aus den erwähnten Gründen wird ein Toleranzbereich WTa vorgesehen. Im gezeigten Beispiel wird der Toleranzbereich WTa so eingestellt, dass die erste ermittelte Phasenlage W1a in der Mitte des Toleranzbereichs WTa liegt. Dies ist nur ein exemplarisches Beispiel, andere Festlegungen des Toleranzbereiches sind gleichermaßen möglich. Analog dazu werden die Phasenlagen W1b - W3b ermittelt und ein Toleranzbereich Wtb festgelegt, und es werden auch die Phasenlagen W1c - W3c ermittelt und ein entsprechender Toleranzbereich WTc festgelegt.

In einem vierten Schritt S4 wird nun geprüft, ob eine Zuordnung des ersten Sensors zu einem der zweiten Sensoren eindeutig durch einen Winkelabgleich möglich ist oder nicht. Anders ausgedrückt wird festgestellt, ob die erste Phasenlage und die zweite Phasenlage innerhalb einem vorbestimmten Beobachtungsintervall jeweils innerhalb eines vorgegebenen Toleranzbereichs bleiben. Betrachtet man dazu wieder Figur 4, so erkennt man dort, dass aufgrund der im Wesentlichen übereinstimmenden Bewegung bzw. Synchronizität des Rads 2a und 2c im Beobachtungsintervall, beispielsweise einem Zeitintervall von t0 - t3 die Phasenlagen W1a - W3a ähnlich den Phasenlagen W1c - W3c sind, und sich überdies innerhalb eines vorgegebenen Toleranzbereichs befinden. Es sei hier ferner angenommen, dass die Toleranzbereiche WTa, WTb und WTc gleich groß sind.

Aufgrund dieses gleichen Laufs der Räder 2a und 2c und somit einer ähnlichen Frequenz des sägezahnförmigen Verlaufs der Signale S5a und S5c ist somit für das fahrzeugseitige Steuergerät bzw. dessen Auswerteeinrichtung in Form des Mikrocontrollers 8 nicht möglich, das Sensorsignal S4a bzw. den Sensor 4a eindeutig dem zweiten Sensor 5a oder 5c zuzuordnen.

Es ist nun das Kennzeichen der beschriebenen Ausführungsform der Erfindung, trotz dieser durch Winkelabgleich unmöglichen oder nur schwer möglichen eindeutigen Zuordnung des ersten Sensors 4a zu einem der zweiten Sensoren die Verbauposition dieses Sensors bzw. des damit verbundenen Rads des Fahrzeugs festzustellen.

Hierzu sei wieder auf Figur 1B verwiesen, in der das fahrzeugseitige Steuergerät 3 mit einer Antenne 33 gezeigt ist, welche an einem bestimmten Ort in einem entfernungsmäßigen Bezug zu den Rädern 2a - 2d am Fahrzeug angebracht ist. Dabei weist die Antenne 33 in Längsrichtung des Fahrzeugs 1 zu den Rädern 2c und 2d bzw. zu deren Sensoren 4c und 4d in der dargestellten Position eine Entfernung L1 auf, und weist zu den Rädern 2a und 2b bzw. zu den entsprechenden Sensoren 4a und 4b in der dargestellten Position die bzgl. L1 größere (bzw. wesentlich größere) Entfernung L2 auf. Entsprechend weist die Antenne auch in Breitenrichtung des Fahrzeugs zu den Rädern 2c und 2a eine erste Entfernung B1 auf, und weist zu den Rädern 2d und 2b eine zweite Entfernung B2, die ca. 4mal so groß wie die Entfernung B1 ist, auf. Somit erkennt man schnell, dass das der Antenne 33 als Empfangseinrichtung nächstgelegene Rad das Rad 2c ist, während das am weitest entfernte Rad das Rad 2b ist. In jedem Fall kann festgestellt werden, dass bei der Anordnung in Figur 1B alle Entfernungen der jeweiligen Räder 2a - 2d zur Antenne 33 unterschiedlich sind. Da eine am Ort der Antenne 33 gemessene Feldstärke eines Funksignals S4a - S4d als Maß für die Entfernung des jeweiligen Sensors zur Empfangseinrichtung in Form der Antenne 33 dient, ist es möglich, mittels einer Feldstärkemessung bzw. RSSI (received signal strength indication) -Messung eines Signals auf den möglichen Ort des aussendenden Sensors und somit auch den Verbauort FL, FR, RL, RR des zugeordneten Rades schließen zu können.

Zurückkommend auf das während des Schritts S4 festgestellten Problems, dass eine eindeutige Zuordnung des ersten Sensors 4a zu einem der zweiten Sensoren 5a oder 5c vorgenommen werden muss, ist es gemäß Schritt S5 nun möglich, die Verbauposition des ersten Sensors bzw. des diesem zugeordneten Rades 2a oder auch die Verbauposition des Sensors 4c bzw. des diesem zugeordneten Rades 2c durch eine Feldstärkemessung der Funksignale S4a und S4c zu bestimmen. Da, wie bereits erwähnt, sich die Antenne 33 mehr im hinteren Abschnitt des Fahrzeugs befindet, wobei die Entfernung L2 vom Rad 2a zur Antenne 33 mehr als doppelt so groß (in der Figur) ist als die Entfernung L1 vom Rad 2c zur Antenne 33, kann eine eindeutige Feldstärkenbestimmung und damit Entfernungsbestimmung durchgeführt werden.

Es ist dabei möglich, dass der Empfänger 6 schon bei Empfang der entsprechenden Funksignale S4a - S4d in Schritt S1 die empfangenen Feldstärken FS4a - FS4d bestimmt, oder dass dies zu einem anderen Zeitpunkt, beispielsweise erst nach Durchführung des Schritts S4 geschieht, in dem erneut Signale S4a - S4d von den Sensoren 4a - 4d zum fahrzeugseitigen Steuergerät 3 gesendet, und dort über die Antenne 33 von dem Empfänger 6 zur Feldstärkenbestimmung verarbeitet werden.

In jedem Fall wird in der fahrzeugseitigen Steuereinrichtung 3 die Auswerteeinrichtung in Form des Mikrocontrollers 8 in Schritt S5 von mehreren Funksignalen S4a - S4d (insbesondere den Funksignalen S4a und S4c) die entsprechenden Feldstärkewerte FS4a - FS4d (insbesondere die Feldstärkewerte FS4a und FS4c) empfangen. Zum Lokalisieren der Räder 2a und 2c bzw. der entsprechenden Sensoren 4a und 4c ist es dann möglich, dass der Mikrocontroller 8 erkennt, dass der gemessene Feldstärkewert FS4c größer als der Feldstärkewert FS4a ist, so dass er aufgrund dieser Unterscheidung in der Feldstärke darauf schließen kann, dass die Funksignale S4c von einem Sensor stammen müssen, welche nahe an der Antenne 33 liegen, wodurch auf eine Position hinten links geschlossen werden kann. Hingegen können die Sensorsignale S4a einem Sensor zugeordnet werden, der von der Antenne 33 weiter entfernt ist, und somit von einer Position vorne links stammen. Vorteilhafterweise wird mit den Signalen S4a - S4d eine entsprechende eindeutige Kennung K4a - K4d mitgeschickt, so dass der Mikrocontroller 8 anhand der Kennung darauf schließen kann, von welchem Sensor welches Signal stammt, und schließlich wo der Sensor mit einer entsprechenden Kennung verbaut ist.

Wird in dem Überprüfungsschritt S4 jedoch festgestellt, dass aufgrund einer Desynchronisierung aller Räder eine eindeutige Zuordnung eines ersten Sensors zu einem zweiten Sensor durch einen Winkelabgleich möglich ist, so wird von Schritt S4 in Schritt S6 übergegangen. Hier wird dann ausgenutzt, dass eine der ersten Phasenlage oder der zweiten Phasenlage in dem bestimmten Beobachtungsintervall nicht innerhalb des vorgegebenen Toleranzbereichs bleibt (wie es beispielsweise bezüglich des Verlaufs des Signals S5b in der Mitte von Figur 4 und der entsprechenden Phasenlage W1b - W3b gezeigt ist). In diesem Fall wird dann der erste Sensor 4a demjenigen zweiten Sensor 5a - 5d zugeordnet, dessen zugeordnete Phasenlage in dem bestimmten Beobachtungsintervall innerhalb eines vorgegebenen Toleranzbereichs bleibt. Im Fall der Figur 4 könnte dies dann für eine Zuordnung des ersten Sensors 4a zu dem zweiten Sensor 5a entsprechend dem oberen Verlauf in Figur 4 zutreffen (es wird vorausgesetzt, dass bei einer Desynchronisierung aller Räder dann auch der Verlauf S5c eine andere Form bzw. andere Frequenz in seinem sägezahnförmigen Verlauf aufweist, wie es auch beim Verlauf S5b der Fall ist).

Zum besseren Verständnis des Schritts S6 wird noch einmal klar gemacht, dass der erste Sensor 4a a priori keiner bestimmten Stelle des Fahrzeugs 1 zugeordnet werden kann. Der erste Sensor 4a ist nämlich einem Rad 2a oder einem Reifen 11 zugeordnet. Das Rad 2a oder der Reifen 11 kann aber an beliebiger Stelle des Fahrzeugs 1 montiert werden, etwa beim Wechsel von Sommerreifen auf Winterreifen. Dies führt dann zu Problemen, wenn der Sensor 4a auch zur Reifendrucküberwachung vorgesehen ist und ein Warnsignal nicht einer bestimmten Stelle des Fahrzeugs 1, also etwa "links vorne" zugeordnet werden kann.

Aus der Figur 4 wird rasch klar, dass, wie oben erwähnt, die Phasenlage W1a - W3a des Signals S4a über den gesamten in der Figur 4 dargestellten Beobachtungszeitraum innerhalb des Toleranzbereichs WTa für das Signal S5a bleibt, wohingegen der Toleranzbereich WTb für das zweite Signal S5b schon bei der zweiten Erfassung verlassen wird. Es ist somit klar, dass das Rad 2a mit dem ersten Sensor 4a unmöglich an der Stelle des Fahrzeugs 1 montiert sein kann, welcher der zweite Sensor 5b zugeordnet ist, denn ansonsten müssten die Phasenlage des Signals S4a mit dem Signal S5b korrelieren. Im gezeigten Beispiel kann der erste Sensor rasch dem zweiten Sensor 5a und somit das Rad 2a einer bestimmten Stelle des Fahrzeugs 1, nämlich links vorne, zugeordnet werden.

Das Verfahren gemäß der dargestellten Ausführungsform der Erfindung kann prinzipiell für jeden ersten Sensor 4a - 4d einzeln ablaufen oder es können alle ersten Sensoren 4a - 4d auf einmal zugeordnet werden.

Aufgrund der zusätzlichen Möglichkeit die Feldstärkenmessung der sensorseitigen Funksignale mit zur Lokalisierung hinzuzuziehen, ist es nicht zwingend notwendig, dass das Beobachtungsintervall so groß gewählt wird, dass sich die Signale S4a - S4d eindeutig einem bestimmten zweiten Sensor 5a - 5d über einen Winkelabgleich zuordnen lassen. Es sind somit auch kürzere Beobachtungszeitintervalle möglich.

Somit kann durch einen asymmetrischen Einbau einer Empfangseinheit, wie der Antenne 33, eine Feldstärkenmessung von sensorseitigen Funksignalen (die vorteilhafterweise mit der gleichen Sendefeldstärke ausgesendet werden) das Verfahren zur Lokalisierung der Verbauposition von zumindest zwei Rädern in einem Kraftfahrzeug robuster und zuverlässiger machen.

Zusammengefasst wird ein Verfahren zur Lokalisierung der Verbauposition von zumindest zwei Rädern 2a - 2d an einem Fahrzeug 1 offenbart. Dabei wird zunächst die Verbauposition der zumindest zwei Räder durch einen Winkelabgleich von Funksignalen von radseitigen ersten Sensoren, die jeweils eine bestimmte Stellung P1 - P6 der Räder angeben, mit Signalen von fahrzeugseitigen zweiten Sensoren, die die Winkellage eines jeweiligen Rads messen und einer bestimmten Stelle des Fahrzeugs zugeordnet sind, durchgeführt. Ist keine eindeutige Zuordnung der Verbauposition durch den Winkelabgleich möglich, dann wird die Verbauposition FL, RL, RL, RR der zumindest zwei Räder 2a - 2d durch Messen der Feldstärke FS4a, FS4b, FS4c, FS4d der jeweiligen Funksignale mittels einer fahrzeugseitigen Empfangseinrichtung ermittelt, wobei die jeweils gemessene Feldstärke als Maß für die Entfernung der fahrzeugseitigen Empfangseinrichtung zu den jeweiligen radseitigen ersten Sensoren einen Rückschluss auf die jeweilige Verbauposition erlaubt.

## Patentansprüche

1. Verfahren zum Lokalisieren einer Verbauposition von zumindest zwei Rädern (2a - 2d) an einem Fahrzeug (1), umfassend die Schritte:
- Empfangen eines ersten Funksignals (S4a) eines an einem Rad (2a) der zumindest zwei Räder (2a - 2d) montierten ersten ersten Sensors (4a), wobei das erste Funksignal (S4a) eine Stellung (P1 - P6) des Rades (2a) angibt, sowie
Empfangen eines zweiten Funksignals (S4c) eines an einem weiteren Rad (2c) der zumindest zwei Räder (2a - 2d) montierten zweiten ersten Sensors (4c), wobei das zweite Funksignal (S4c) eine Stellung (P1 - P6) des weiteren Rades (2c) angibt;
- Empfangen eines ersten Messwerts (S5a) eines ersten zweiten Sensors (5a), der eine Winkellage eines ersten Rades (2a) der zumindest zwei Räder (2a - 2d) misst, und der einer bestimmten ersten Stelle des Fahrzeugs (1) zugeordnet ist sowie Empfangen eines zweiten Messwerts (S5c) eines zweiten zweiten Sensors (5c), der eine Winkellage eines zweiten Rades der zumindest zwei Räder (2a - 2d) misst, und der einer bestimmten zweiten Stelle des Fahrzeugs (1) zugeordnet ist;
**gekennzeichnet durch** die Schritte:
- Bestimmen einer ersten Phasenlage (W1a - W3a) des ersten Funksignals (S4a) in Relation zu dem ersten Messwert (S5a), sowie Bestimmen einer zweiten Phasenlage (W1c - W3c) des ersten Funksignals (S4a) in Relation zu dem zweiten Messwert (S5c) ; und,
- falls die erste Phasenlage (W1a - W3a) und die zweite Phasenlage (W1c - W3c) in einem vorbestimmten Beobachtungsintervall jeweils innerhalb eines vorgegebenen Toleranzbereichs (WTa, WTc) bleibt, Ermitteln der Verbauposition (FL, RL) der zumindest zwei Räder (2a - 2d) **durch** Messen einer Feldstärke (FS4a) des ersten Funksignals (S4a) und einer Feldstärke (FS4c) des zweiten Funksignals (S4c) mittels einer fahrzeugseitigen Empfangseinrichtung (33), wobei die jeweils gemessene Feldstärke eine Entfernung (L1, L2) der fahrzeugseitigen Empfangseinrichtung (33) zu dem ersten ersten Sensor (4a) und zu dem zweiten ersten Sensor (4c) kennzeichnet.

2. Verfahren nach Anspruch 1, wobei, falls eine der ersten Phasenlage (W1a - W3a) oder der zweiten Phasenlage (W1c - W3c) in dem vorbestimmten Beobachtungsintervall nicht innerhalb des vorgegebenen Toleranzbereichs (WTa, WTb) bleibt, der erste erste Sensor (4a) zu demjenigen des ersten zweiten Sensors (5a) oder zweiten zweiten Sensors (5c) zugeordnet wird, dessen zugeordnete Phasenlage in dem vorbestimmten Beobachtungsintervall innerhalb des vorgegebenen Toleranzbereichs (Wta) bleibt.

3. Verfahren nach Anspruch 1 oder Anspruch 2, wobei der erste erste Sensor (4a) das erste Funksignal (S4a) in einer vorgebbaren Stellung (P1 - P6) des Rades (2a) aussendet und/oder der zweite erste Sensor (4c) das zweite Funksignal (S4c) in einer vorgebbaren Stellung (P1 - P6) des weiteren Rades (2c) aussendet.

4. Verfahren nach Anspruch 3, wobei die vorgebbare Stellung (P1 - P6) ausgewählt ist aus der Gruppe, bestehend aus einer Winkelstellung des Rades (2a - 2d) bezogen auf den Raum, einem Eintritt eines Punktes am Radumfang in eine Radaufstandfläche (A), einem Austritt eines Punktes am Radumfang aus der Radaufstandsfläche (A) und einem Erreichen eines Punkts am Radumfang einer Mitte der Radaufstandfläche (A).

5. Verfahren nach einem der Ansprüche 1 bis 4, wobei das vorbestimmte Beobachtungsintervall derart gewählt wird, dass es eine vorbestimmte Umdrehungszahl des ersten Rades oder des zweiten Rades der zumindest zwei Räder (2a - 2d) umfasst.

6. Verfahren nach einem der Ansprüche 1 bis 4, wobei zur Bestimmung des vorbestimmten Beobachtungsintervalls ein Eintreten einer bestimmten Betriebssituation des Fahrzeugs (1) abgewartet wird.

7. Verfahren nach einem der Ansprüche 1 bis 6, wobei die fahrzeugseitige Empfangseinrichtung (33) entfernungsmäßig unsymmetrisch bezüglich der zumindest zwei Räder (2a - 2d) angeordnet wird.

8. Verfahren nach einem der Ansprüche 1 bis 7, wobei das erste Funksignal (S4a) und das zweite Funksignal (S4c) mit einer vorbestimmten gleichen Sendestärke ausgesendet werden.

9. Anordnung zum Lokalisieren einer Verbauposition von zumindest zwei Rädern (2a - 2d) an einem Fahrzeug, aufweisend
- einen an einem Rad (2a) der zumindest zwei Räder (2a - 2d) montierten ersten ersten Sensor (4a) ausgebildet zum Ausgeben eines ersten Funksignals (S4a), wobei das erste Funksignal (S4a) eine Stellung (P1 - P6) des Rades (2a - 2d) angibt;
- einen an einem weiteren Rad (2c) der zumindest zwei Räder (2a - 2d) montierten zweiten ersten Sensor (4c) ausgebildet zum Ausgeben eines zweiten Funksignals (S4c), wobei das zweite Funksignal (S4c) eine Stellung (P1 - P6) des weiteren Rades (2c) angibt;
- eine fahrzeugseitige Empfangseinrichtung (33; 3) ausgebildet zum Empfangen des ersten Funksignals (S4a) und des zweiten Funksignals (S4c);
- einen ersten zweiten Sensor (5a), der einer bestimmten ersten Stelle des Fahrzeugs (1) zugeordnet ist und ausgebildet ist, eine Winkellage eines ersten Rades (2a) der zumindest zwei Räder (2a - 2d) zu messen und einen entsprechenden ersten Messwert (S5a) auszugeben;
- einen zweiten zweiten Sensor (5c), der einer bestimmten zweiten Stelle des Fahrzeugs (1) zugeordnet ist und ausgebildet ist, eine Winkellage eines zweiten Rades (2c) der zumindest zwei Räder (2a - 2d) zu messen und einen entsprechenden zweiten Messwert (S5c) auszugeben;
**gekennzeichnet durch**
- eine fahrzeugseitige Auswerteeinrichtung (8) ausgebildet zum
• Bestimmen einer ersten Phasenlage (W1a - W3a) des ersten Funksignals (S4a) in Relation zu dem ersten Messwert (S5a) sowie zum Bestimmen einer zweiten Phasenlage (W1c - W3c) des ersten Funksignals (S4a) in Relation zu dem zweiten Messwert (S5c); und,
• falls die erste Phasenlage (W1a - W3a) und die zweite Phasenlage (W1c - W3c) in einem vorbestimmten Beobachtungsintervall jeweils innerhalb eines vorgegebenen Toleranzbereichs (WTa, WTc) bleibt, zum Ermitteln der Verbauposition der zumindest zwei Räder (2a, 2c) mittels einer gemessenen Feldstärke (FS4a) des ersten Funksignals und einer gemessenen Feldstärke (FS4c) des zweiten Funksignals, wobei die jeweils gemessene Feldstärke eine Entfernung der fahrzeugseitigen Empfangseinrichtung zu dem ersten ersten Sensor (4a) und zu dem zweiten ersten Sensor (4c) kennzeichnet.

10. Steuergerät (3) für eine Anordnung zum Lokalisieren einer Verbauposition von zumindest zwei Rädern (2a - 2d) an einem Fahrzeug, aufweisend
- einen ersten Eingang (6) ausgebildet zum Empfangen eines ersten Funksignals (S4a) eines an einem Rad (2a) der zumindest zwei Räder (2a - 2d) montierten ersten ersten Sensors (4a), wobei das erste Funksignal (S4a) eine Stellung des Rades (2a) angibt, sowie zum Empfangen eines zweiten Funksignals (S4c) eines an einem weiteren Rad (2c) der zumindest zwei Räder (2a - 2d) montierten zweiten ersten Sensors (4c), wobei das zweite Funksignal (S4c) eine Stellung (P1 - P6) des weiteren Rades (2c) angibt;
- einen zweiten Eingang (7) ausgebildet zum Empfangen eines ersten Messwerts (S5a) eines ersten zweiten Sensors (5a), der eine Winkellage eines ersten Rades (2a) der zumindest zwei Räder (2a - 2d) misst, und einer bestimmten ersten Stelle des Fahrzeugs (1) zugeordnet ist, sowie zum Empfangen eines zweiten Messwerts (S5c) eines zweiten zweiten Sensors (5c), der eine Winkellage eines zweiten Rades der zumindest zwei Räder (2a - 2d) misst, und einer bestimmten zweiten Stelle des Fahrzeugs (1) zugeordnet ist;
**gekennzeichnet durch**
- eine Auswerteeinrichtung (8) ausgebildet zum
• Bestimmen einer ersten Phasenlage (W1a - W3a) des ersten Funksignals (S4a) in Relation zu dem ersten Messwert (S5a) sowie zum Bestimmen einer zweiten Phasenlage (W1c - W3c) des ersten Funksignals (S4a) in Relation zu dem zweiten Messwert (S5c); und,
• falls die erste Phasenlage (W1a - W3a) und die zweite Phasenlage (W1c - W3c) in einem vorbestimmten Beobachtungsintervall jeweils innerhalb eines vorgegebenen Toleranzbereichs (WTa, WTc) bleibt, zum Ermitteln der Verbauposition der zumindest zwei Räder (2a, 2c) mittels einer gemessenen Feldstärke (FS4a) des ersten Funksignals und einer gemessenen Feldstärke (FS4c) des zweiten Funksignals, wobei die jeweils gemessene Feldstärke eine Entfernung der fahrzeugseitigen Empfangseinrichtung zu dem ersten ersten Sensor (4a) und zu dem zweiten ersten Sensor (4c) kennzeichnet.

11. Fahrzeug (1) aufweisend
- zumindest zwei Räder (2a - 2d);
- eine Anordnung nach Anspruch 9.

12. Computerprogrammprodukt, welches ausgeführt ist, ein Verfahren nach einem der Ansprüche 1 bis 8 auszuführen, wenn es auf einem Steuergerät nach Anspruch 10 ausgeführt wird.

## Claims

1. Method for localizing an installation position of at least two wheels (2a - 2d) on a vehicle (1), comprising the steps:
- receiving a first radio signal (S4a) of a first first sensor (4a) mounted on one wheel (2a) of the at least two wheels (2a - 2d), wherein the first radio signal (S4a) indicates a position (P1 - P6) of the wheel (2a), as well as
receiving a second radio signal (S4c) of a second first sensor (4c) mounted on a further wheel (2c) of the at least two wheels (2a - 2d), wherein the second radio signal (S4c) indicates a position (P1 - P6) of the further wheel (2c);
- receiving a first measurement value (S5a) of a first second sensor (5a) that measures an angular position of a first wheel (2a) of the at least two wheels (2a - 2d) and that is associated with a certain first point of the vehicle (1) as well as receiving a second measurement value (S5c) of a second second sensor(5c) that measures the angular position of a second wheel of the at least two wheels (2a - 2d) and that is associated with a certain second point of the vehicle (1);
**characterized by** the steps:
- determining a first phase position (W1a - W3a) of the first radio signal (S4a) relative to the first measurement value (S5a), as well as determining a second phase position (W1c - W3c) of the first radio signal (S4a) relative to the second measurement value (S5c) ; and,
- if the first phase position (W1a - W3a) and the second phase position (W1c - W3c) each remain within a predetermined tolerance range (WTa, WTc) in a predetermined observation interval, determining the installation position (FL, RL) of the at least two wheels (2a - 2d) by measuring a field strength (FS4a) of the first radio signal (S4a) and a field strength (FS4c) of the second radio signal (S4c) by means of a receiving device (33) on the vehicle, wherein the respective measured field strength characterizes a distance (L1, L2) of the receiving device (33) on the vehicle from the first first sensor (4a) and from the second first sensor (4c).

2. Method according to Claim 1, wherein, if one of the first phase position (W1a - W3a) or the second phase position (W1c - W3c) does not remain within the predetermined tolerance range (WTa, WTb) in the predetermined observation interval, the first first sensor (4a) is associated with the one of the first second sensor (5a) or the second second sensor (5c) of which the associated phase position remains within the predetermined tolerance range (Wta) in the predetermined observation interval.

3. Method according to Claim 1 or Claim 2, wherein the first first sensor (4a) transmits the first radio signal (S4a) in a predefinable position (P1 - P6) of the wheel (2a) and/or the second first sensor (4c) transmits the second radio signal (S4c) in a predefinable position (P1 - P6) of the further wheel (2c).

4. Method according to Claim 3, wherein the predefinable position (P1 - P6) is selected from the group consisting of an angular position of the wheel (2a - 2d) relative to space, an entry of a point on the circumference of the wheel into a wheel contact area (A), an exit of a point on the circumference of the wheel from the wheel contact area (A) and a point on the circumference of the wheel reaching a center of the wheel contact area (A).

5. Method according to any one of Claims 1 to 4, wherein the predetermined observation interval is selected so that it contains a predetermined number of revolutions of the first wheel or of the second wheel of the at least two wheels (2a - 2d).

6. Method according to any one of Claims 1 to 4, wherein the occurrence of a certain operating situation of the vehicle (1) is awaited for determining the predetermined observation interval.

7. Method according to any one of Claims 1 to 6, wherein the receiving device (33) on the vehicle is disposed asymmetrically relative to and close to the at least two wheels (2a - 2d).

8. Method according to any one of Claims 1 to 7, wherein the first radio signal (S4a) and the second radio signal (S4c) are transmitted with a predetermined equal transmission power.

9. Arrangement for localizing an installation position of at least two wheels (2a - 2d) on a vehicle, comprising
- a first first sensor (4a) mounted on one wheel (2a) of the at least two wheels (2a - 2d) and designed to output a first radio signal (S4a), wherein the first radio signal (S4a) indicates a position (P1 - P6) of the wheel (2a - 2d);
- a second first sensor (4c) mounted on a further wheel (2c) of the at least two wheels (2a - 2d) and designed to output a second radio signal (S4c), wherein the second radio signal (S4c) indicates a position (P1 - P6) of the further wheel (2c);
- a receiving device (33; 3) on the vehicle designed for receiving the first radio signal (S4a) and the second radio signal (S4c);
- a first second sensor (5a) that is associated with a certain first point of the vehicle (1) and that is designed to measure an angular position of a first wheel (2a) of the at least two wheels (2a-2d) and to output a corresponding first measurement value (S5a);
- a second second sensor (5c) that is associated with a certain second point of the vehicle (1) and that is designed to measure an angular position of a second wheel (2c) of the at least two wheels (2a - 2d) and to output a corresponding second measurement value (S5c);
**characterized by**
• an analyzing device (8) on the vehicle designed to determine a first phase position (W1a - W3a) of the first radio signal (S4a) relative to the first measurement value (S5a) as well as to determine a second phase position (W1c - W3c) of the first radio signal (S4a) relative to the second measurement value (S5c); and,
• if the first phase position (W1a - W3a) and the second phase position (W1c - W3c) each remain within a predetermined tolerance range (WTa, WTc) in a predetermined observation interval, to determine the installation position of the at least two wheels (2a, 2c) by means of a measured field strength (FS4a) of the first radio signal and a measured field strength (FS4c) of the second radio signal, wherein the respective measured field strength characterizes a distance of the receiving device on the vehicle from the first first sensor (4a) and from the second first sensor (4c).

10. Control unit (3) for an arrangement for localizing an installation position of at least two wheels (2a - 2d) on a vehicle, comprising
- a first input (6) designed for receiving a first radio signal (S4a) of a first first sensor (4a) mounted on one wheel (2a) of the at least two wheels (2a - 2d), wherein the first radio signal (S4a) indicates a position of the wheel (2a), as well as for receiving a second radio signal (S4c) of a second first sensor (4c) mounted on a further wheel (2c) of the at least two wheels (2a - 2d), wherein the second radio signal (S4c) indicates a position (P1 - P6) of the further wheel (2c) ;
- a second input (7) designed for receiving a first measurement value (S5a) of a first second sensor (5a) that measures an angular position of a first wheel (2a) of the at least two wheels (2a - 2d) and that is associated with a certain first position of the vehicle (1), as well as for receiving a second measurement value (S5c) of a second second sensor (5c) that measures the angular position of a second wheel of the at least two wheels (2a - 2d) and that is associated with a certain second point of the vehicle (1);
**characterized by**
- an analyzing device (8) designed for
• determining a first phase position (W1a - W3a) of the first radio signal (S4a) relative to the first measurement value (S5a) as well as for determining a second phase position (W1c - W3c) of the first radio signal (S4a) relative to the second measurement value (S5c); and,
• if the first phase position (W1a - W3a) and the second phase position (W1c - W3c) each remain within a predetermined tolerance range (WTa, WTc) in a predetermined observation interval, for determining the installation position of the at least two wheels (2a, 2c) by means of a measured field strength (FS4a) of the first radio signal and a measured field strength (FS4c) of the second radio signal, wherein the respective measured field strength characterizes a distance of the receiving device on the vehicle from the first first sensor (4a) and from the second first sensor (4c).

11. Vehicle (1) comprising
- at least two wheels (2a - 2d);
- an arrangement according to Claim 9.

12. Computer program product that is implemented to perform a method according to any one of Claims 1 to 8 when it is executed on a control unit according to Claim 10.

## Revendications

1. Procédé pour localiser une position de montage d'au moins deux roues (2a - 2d) sur un véhicule (1), comprenant les étapes consistant à :
- recevoir un premier signal radio (S4a) d'un premier premier capteur (4a) monté sur une roue (2a) desdites au moins deux roues (2a - 2d), dans lequel le premier signal radio (S4a) indique une position (P1 - P6) de la roue (2a), et
recevoir un deuxième signal radio (S4c) d'un deuxième premier capteur (4c) monté sur une autre roue (2c) desdites au moins deux roues (2a - 2d), dans lequel le deuxième signal radio (S4c) indique une position (P1 - P6) de l'autre roue (2c) ;
- recevoir une première valeur de mesure (S5a) d'un premier deuxième capteur (5a), qui mesure une position angulaire d'une première roue (2a) desdites au moins deux roues (2a - 2d) et est associée à un premier emplacement déterminé du véhicule (1), et
recevoir une deuxième valeur de mesure (S5c) d'un deuxième capteur (5c), qui mesure la position angulaire d'une deuxième roue desdites au moins deux roues (2a - 2d) et est associée à un deuxième emplacement déterminé du véhicule (1) ; **caractérisé par** les étapes consistant à :
- déterminer une première position de phase (W1a - W3a) du premier signal radio (S4a) par rapport à la première valeur de mesure (S5a), et déterminer une deuxième position de phase (W1c - W3c) du premier signal radio (S4a) par rapport à la deuxième valeur de mesure (S5c) ; et
- si la première position de phase (W1a - W3a) et la deuxième position de phase (W1c - W3c), au cours d'un intervalle d'observation prédéterminé, restent respectivement dans une plage de tolérance prédéterminée (WTa, WTc), déterminer la position de montage (FL, RL) desdites au moins deux roues (2a - 2d) en mesurant une intensité de champ (FS4a) du premier signal radio (S4a) et une intensité de champ (FS4c) du deuxième signal radio (S4c) au moyen d'un dispositif de réception côté véhicule (33), dans lequel l'intensité de champ respectivement mesurée caractérise une distance (L1, L2) entre le dispositif de réception côté véhicule (33) et le premier premier (4a) capteur et le deuxième premier capteur (4c).

2. Procédé selon la revendication 1, dans lequel, si l'une de la première position de phase (W1a - W3a) ou de la deuxième position de phase (W1c - W3c), au cours de l'intervalle d'observation prédéterminé, ne reste pas dans la plage de tolérance prédéterminée (WTa, WTb), le premier premier capteur (4a) est associé à celui du premier deuxième capteur (5a) ou du deuxième deuxième capteur (5c) dont la position de phase associée, au cours de l'intervalle d'observation prédéterminé, reste dans la plage de tolérance prédéterminée (Wta).

3. Procédé selon la revendication 1 ou la revendication 2, dans lequel le premier premier capteur (4a) émet le premier signal radio (S4a) à une position prédéterminée (P1 - P6) de la roue (2a) et/ou le deuxième premier capteur (4c) émet le deuxième signal radio (S4c) à une position prédéterminée (P1 - P6) de l'autre roue (2c).

4. Procédé selon la revendication 3, dans lequel la position (P1 - P6) pouvant être prédéterminée est sélectionnée dans le groupe consistant en une position angulaire de la roue (2a - 2d) par rapport à l'espace, le fait qu'un point situé à la circonférence de la roue pénètre dans une surface de contact de roue (A), le fait qu'un point situé à la circonférence de la roue sorte de la surface de contact de roue (A) et le fait qu'un point situé à la circonférence de la roue atteigne un centre de la surface de contact de roue (A).

5. Procédé selon l'une des revendications 1 à 4, dans lequel l'intervalle d'observation prédéterminé est sélectionné de manière à ce qu'il comprenne un nombre prédéterminé de tours de la première roue ou de la deuxième roue desdites au moins deux roues (2a - 2d).

6. Procédé selon l'une des revendications 1 à 4, dans lequel la survenue d'une situation de fonctionnement déterminée du véhicule (1) est attendue pour déterminer l'intervalle d'observation prédéterminé.

7. Procédé selon l'une des revendications 1 à 6, dans lequel le dispositif de réception côté véhicule (33) est disposé de manière asymétrique en distance par rapport auxdites au moins deux roues (2a - 2d).

8. Procédé selon l'une des revendications 1 à 7, dans lequel le premier signal radio (S4a) et le deuxième signal radio (S4c) sont émis avec des intensités d'émission égales prédéterminées.

9. Dispositif pour localiser une position de montage d'au moins deux roues (2a - 2d) sur un véhicule, comprenant :
- un premier premier capteur (4a) monté sur une roue (2a) desdites au moins deux roues (2a - 2d) et conçu pour délivrer un premier signal radio (S4a), dans lequel le premier signal radio (S4a) indique une position (P1 - P6) de la roue (2a - 2d) ;
- un deuxième premier capteur (4c) monté sur une autre roue (2c) desdites au moins deux roues (2a - 2d) et conçu pour délivrer un deuxième signal radio (S4c), dans lequel le deuxième signal radio (S4c) indique une position (P1 - P6) de l'autre roue (2c) ;
- un dispositif de réception côté véhicule (33 ; 3) conçu pour recevoir le premier signal radio (S4a) et le deuxième signal radio (S4c) ;
- un premier deuxième capteur (5a) qui est associé à un premier emplacement déterminé du véhicule (1) et est conçu pour mesurer une position angulaire d'une première roue (2a) desdites au moins deux roues (2a - 2d) et pour délivrer une première valeur de mesure (S5a) correspondante ;
- un deuxième deuxième capteur (5c) qui est associé à un deuxième emplacement déterminé du véhicule (1) et est conçu pour mesurer une position angulaire d'une deuxième roue (2c) desdites au moins deux roues (2a - 2d) et pour délivrer une deuxième valeur de mesure (S5c) correspondante ;
**caractérisé par**
- un dispositif d'évaluation côté véhicule (8) conçu pour
• déterminer une première position de phase (W1a - W3a) du premier signal radio (S4a) par rapport à la première valeur de mesure (S5a) et déterminer une deuxième position de phase (W1c - W3c) du premier signal radio (S4a) par rapport à la deuxième valeur de mesure (S5c) ; et
• si la première position de phase (W1a - W3a) et la deuxième position de phase (W1c - W3c), au cours d'un intervalle d'observation prédéterminé, restent respectivement dans une plage de tolérance prédéterminée (WTa, WTc), déterminer la position de montage desdites au moins deux roues (2a, 2c) au moyen d'une intensité de champ (FS4a) mesurée du premier signal radio et d'une intensité de champ (FS4c) mesurée du deuxième signal radio, dans lequel l'intensité de champ respectivement mesurée caractérise une distance entre le dispositif de réception côté véhicule et le premier premier capteur (4a) et le deuxième premier capteur (4c).

10. Appareil de commande (3) pour un dispositif destiné à localiser une position de montage d'au moins deux roues (2a - 2d) sur un véhicule, comprenant
- une première entrée (6) conçue pour recevoir un premier signal radio (S4a) d'un premier premier capteur (4a) monté sur une roue (2a) desdites au moins deux roues (2a - 2d), dans lequel le premier signal radio (S4a) indique une position de la roue (2a), et pour recevoir un deuxième signal radio (S4c) d'un deuxième premier capteur (4c) monté sur une autre roue (2c) desdites au moins deux roues (2a - 2d), dans lequel le deuxième signal radio (S4c) indique une position (P1 - P6) de l'autre roue (2c) ;
- une deuxième entrée (7) conçue pour recevoir une première valeur de mesure (S5a) d'un premier deuxième capteur (5a) qui mesure une position angulaire d'une première roue (2a) desdites au moins deux roues (2a - 2d) et est associé à un premier emplacement déterminé du véhicule (1), et pour recevoir une deuxième valeur de mesure (S5c) d'un deuxième deuxième capteur (5c) qui mesure une position angulaire d'une deuxième roue desdites au moins deux roues (2a - 2d) et est associé à un deuxième emplacement déterminé du véhicule (1) ;
**caractérisé par**
- un dispositif d'évaluation (8) conçu pour
• déterminer une première position de phase (W1a - W3a) du premier signal radio (S4a) par rapport à la première valeur de mesure (S5a) et déterminer une deuxième position de phase (W1c - W3c) du premier signal radio (S4a) par rapport à la deuxième valeur de mesure (S5c) ; et
• si la première position de phase (W1a - W3a) et la deuxième position de phase (W1c - W3c), au cours d'un intervalle d'observation prédéterminé, restent respectivement dans une plage de tolérance prédéterminée (WTa, WTc), déterminer la position de montage desdites au moins deux roues (2a, 2c) au moyen d'une intensité de champ (FS4a) mesurée du premier signal radio et d'une intensité de champ (FS4c) mesurée du deuxième signal radio, dans lequel l'intensité de champ respectivement mesurée caractérise une distance entre le dispositif de réception côté véhicule et le premier premier capteur (4a) et le deuxième premier capteur (4c).

11. Véhicule (1), comportant
- au moins deux roues (2a - 2d) ;
- un dispositif selon la revendication 9.

12. Produit de programme d'ordinateur qui est conçu pour mettre en oeuvre un procédé selon l'une des revendications 1 à 8 lorsqu'il est exécuté sur un appareil de commande selon la revendication 10.
